# EUROPÄISCHE PATENTANMELDUNG

(11) **EP 1 714 838 A1**
(43) Veröffentlichungstag der Anmeldung: **25.10.2006**
(21) Anmeldenummer: 05008940.8
(22) Anmeldetag: 22.04.2005
(51) Int. Cl.: B60R 21/045

(54) **Knieschutzeinrichtung**

(71) Anmelder: Delphi Technologies, Inc., Troy, MI 48007 (US)
(72) Erfinder: Dancasius, Dr. Michael, 42115 Wuppertal (DE); v. der Muehlen, Achim, 42279 Wuppertal (DE)
(74) Vertreter: Manitz, Finsterwald & Partner GbR

(57) **Zusammenfassung**

Die Erfindung betrifft eine Knieschutzeinrichtung für Kraftfahrzeuge mit einer sich im Einbauzustand quer zur Fahrzeuglängsachse erstreckenden Prallplatte und einer Stützanordnung für die Prallplatte, die an festen Fahrzeugstrukturen befestigbar ist, wobei die Stützanordnung an seitlich von der Prallplatte gelegenen Strukturen des Fahrzeugs befestigbar und zur Absorption von Aufprallenergie verformbar ist.

## Beschreibung

Die Erfindung betrifft eine Knieschutzeinrichtung für Kraftfahrzeuge mit einer sich im Einbauzustand quer zur Fahrzeuglängsachse erstreckenden Prallplatte und einer Stützanordnung für die Prallplatte.

Derzeit werden Abstützungen für Knieschutzplatten an festen Strukturen des Fahrzeugs befestigt, die - vom Fahrzeuginnenraum aus gesehen - hinter der Platte gelegen sind. Die Stützanordnung, beispielsweise in Form mehrerer Träger, erstreckt sich dabei im Wesentlichen parallel zur Fahrzeuglängsachse von der Rückseite der Platte bis zur Fahrzeugstruktur. Bei dieser handelt es sich meist um einen durchgehenden Querträger im vorderen Bereich des Fahrzeuginnenraumes. Der Begriff Fahrzeugstruktur beinhaltet im Rahmen dieser Anmeldung auch die Cockpit-Struktur des Fahrzeugs oder andere Fahrzeugausstattungen.

Eine solche Abstützung hat den Nachteil, dass wertvoller Raum im vorderen Bereich des Innenraumes verloren geht. Moderne Kraftfahrzeuge haben einen immer größeren Platzbedarf für die unterschiedlichsten Zusatzeinrichtungen. Zu nennen sind hier beispielsweise Einrichtungen für die Klimatisierung, Elektrik- und Elektronikmodule etc.. Außerdem sind für die Instrumententafel Designaspekte zu berücksichtigen.

Aufgabe der Erfindung ist es daher, eine Knieschutzeinrichtung für Kraftfahrzeuge der eingangs genannten Art zu schaffen, die ohne Einbußen bei der Sicherheit maximale Freiheit bei Aufbau und Design im Fahrzeuginnenraum und insbesondere bei der Instrumententafel bietet.

Die Lösung dieser Aufgabe erfolgt durch die Merkmale des Anspruchs 1.

Erfindungsgemäß ist die Stützanordnung für die Prallplatte an seitlich von der Prallplatte gelegenen Strukturen des Fahrzeugs befestigbar und zur Absorption von Aufprallenergie verformbar.

Die Erfindung verlässt den eingefahrenen Weg einer in Längsrichtung orientierten Abstützung von Knieschutzplatten, indem nunmehr die Stützanordnung so ausgelegt ist, dass sie an seitlichen Fahrzeugstrukturen befestigt werden kann. Der Raum hinter der Prallplatte wird so nicht mehr benötigt und steht damit zur Unterbringung von weiteren Komponenten zur Verfügung.

Die Erfindung beruht auf der Erkenntnis, dass auch eine laterale Plattenabstützung so ausgeführt werden kann, dass bestehende und zukünftige Sicherheitsanforderungen erfüllt werden können. Die erfindungsgemäße Stützanordnung kann insbesondere so ausgelegt werden, dass bei einem Aufprall auf die Platte sehr schnell ein hoher Widerstand entgegengesetzt wird und dieser Widerstand über einen langen Weg aufrechterhalten bleibt. Dabei kann die Stützanordnung so ausgebildet werden, dass sie sich unter Last räumlich verformt und gewissermaßen "kollabiert", wobei Aufprallenergie absorbiert wird. Berechnungen und Untersuchungen haben ergeben, dass eine laterale Abstützung im Sinne der Erfindung nicht nur alle relevanten Sicherheitsanforderungen erfüllen, sondern insbesondere auch für eine definierte Bewegung der Prallplatte über einen langen Weg sorgen kann.

Bevorzugte Ausführungsformen der Erfindung sind auch in den abhängigen Ansprüchen, der Beschreibung sowie der Zeichnung angegeben.

Vorzugsweise ist vorgesehen, dass sich die Stützanordnung ausgehend von der Rückseite der Prallplatte seitlich aus dem hinter der Prallplatte gelegenen Raum heraus zu den seitlichen Fahrzeugstrukturen erstreckt. Dabei kann sich die Stützanordnung zunächst über eine gewisse Strecke senkrecht zur Plattenebene erstrecken, bevor sie seitlich nach außen verläuft, um so den Raum hinter der Prallplatte zu "verlassen".

Die Abstützung der Prallplatte erfolgt bevorzugt im Bereich der seitlichen Enden der Prallplatte.

Gemäß einer besonders bevorzugten praktischen Ausgestaltung ist die Prallplatte einstückig mit der Stützanordnung oder zumindest mit einem Teil der Stützanordnung ausgebildet. Hierdurch werden Herstellung und Montage erheblich vereinfacht.

Ferner kann die Prallplatte als integriertes Teil einer Instrumententafel oder eines Cockpitsystems des Fahrzeugs ausgebildet sein. Hierbei ist es bevorzugt, wenn die Stützanordnung separat von der Prallplatte vorgesehen ist und eine Stützfläche für die Prallplatte aufweist.

Die Stützanordnung kann zwei in Querrichtung beabstandete Träger umfassen, die jeweils mit ihrem einen Ende seitlich am Fahrzeug befestigbar und zur Abstützung der Prallplatte mit ihrem anderen Ende ausgebildet sind.

Die Träger können dabei jeweils als ein Winkelelement ausgebildet sein.

Des Weiteren können die Träger jeweils zumindest bereichsweise als offener Rahmen ausgebildet sein. Ein Variieren der Größe der Rahmenöffnung stellt eine erfindungsgemäße Möglichkeit dar, das Verformungs- bzw. Absorptionsverhalten der Stützanordnung entsprechend den jeweiligen Anforderungen einzustellen.

Jeder Träger kann zwischen seinem Befestigungsende und dem Stützende eine Abstandskomponente sowohl quer als auch parallel zur Fahrzeuglängsachse aufweisen. Eine gedachte Verbindungslinie zwischen dem Befestigungsende und dem Stützende des Trägers verläuft somit schräg zur Fahrzeuglängsachse.

Dabei kann die Komponente in Querrichtung größer sein als die Abstandskomponente parallel zur Längsachse.

In einer möglichen Ausgestaltungsvariante umfasst jeder Träger einen quer verlaufenden, seitlich am Fahrzeug befestigbaren Befestigungsabschnitt und einen in Längsrichtung verlaufenden Stützabschnitt.

In einer anderen Ausgestaltungsvariante erstreckt sich jeder Träger zumindest bereichsweise und insbesondere von seinem Befestigungsende bis zum Stützende schräg zur Fahrzeuglängsachse.

Des Weiteren kann jeder Träger zumindest bereichsweise einen gestuften oder wellenartigen Verlauf aufweisen.

Gemäß einer weiteren Ausgestaltungsvariante ist jeder Träger in einem horizontalen Querschnitt etwa U-förmig gebogen.

Grundsätzlich kann die Formgestaltung der Stützanordnung und insbesondere die Auslegung von die Stützanordnung bildenden Trägern beliebig gewählt werden, und zwar insbesondere in Abhängigkeit von dem jeweils gewünschten oder geforderten Crashverhalten der Gesamtanordnung.

Des Weiteren ist es erfindungsgemäß möglich, aber keinesfalls zwingend, dass jeder Träger einstückig ausgebildet ist.

Ferner wird erfindungsgemäß vorgeschlagen, unterhalb der Stützanordnung ein Airbagmodul vorzusehen, das an der Stützanordnung angebracht und/ oder in die Stützanordnung integriert ist.

Die Erfindung betrifft außerdem eine Kraftfahrzeuginnenausstattung mit wenigstens einer Knieschutzeinrichtung, wie sie vorstehend erläutert wurde. Bei dieser Ausstattung kann es sich z.B. um ein Cockpitsystem, eine Instrumententafel oder ein Rückhaltesystem handeln, allgemein um ein Modul oder eine Baugruppe, die als eine Einheit handhabbar ist oder geliefert wird und die Knieschutzeinrichtung als insbesondere integrierten Bestandteil umfasst.

Die Knieschutzeinrichtung kann sowohl auf der Fahrer- als auch der Beifahrerseite des Fahrzeugs eingesetzt werden.

Die Erfindung wird im Folgenden beispielhaft unter Bezugnahme auf die Zeichnung beschrieben. Es zeigen:

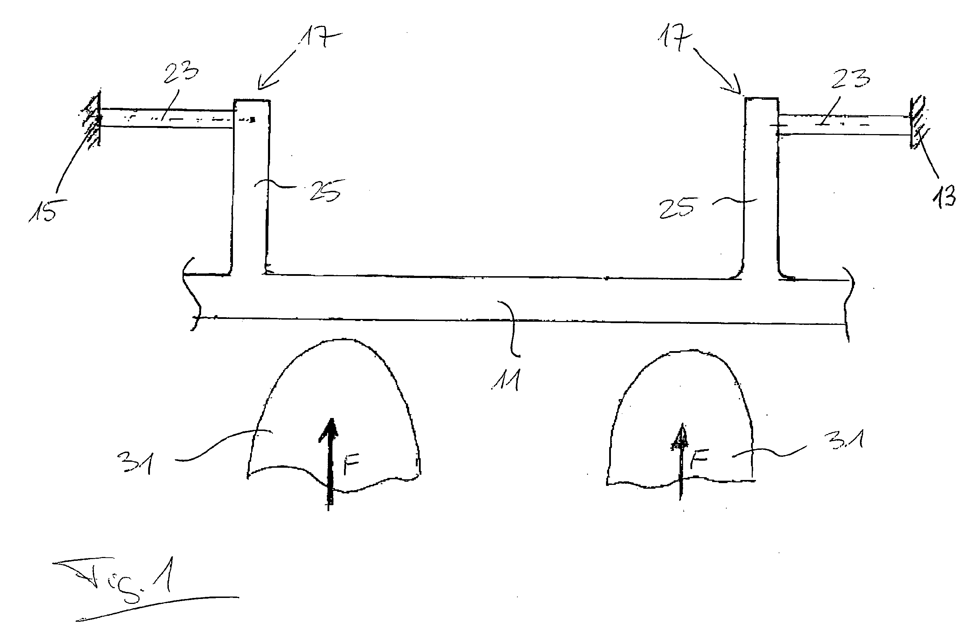

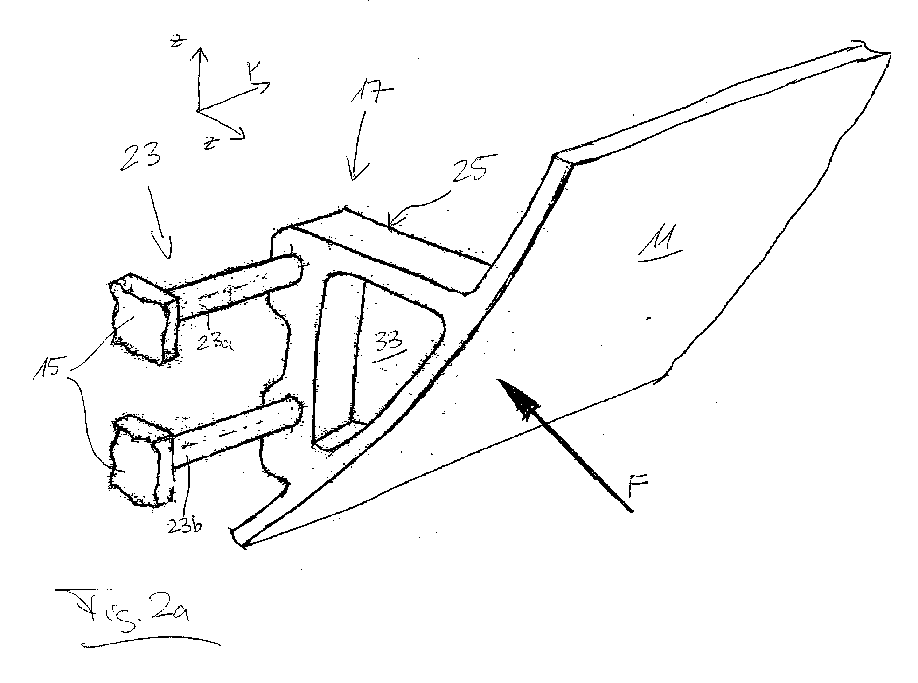

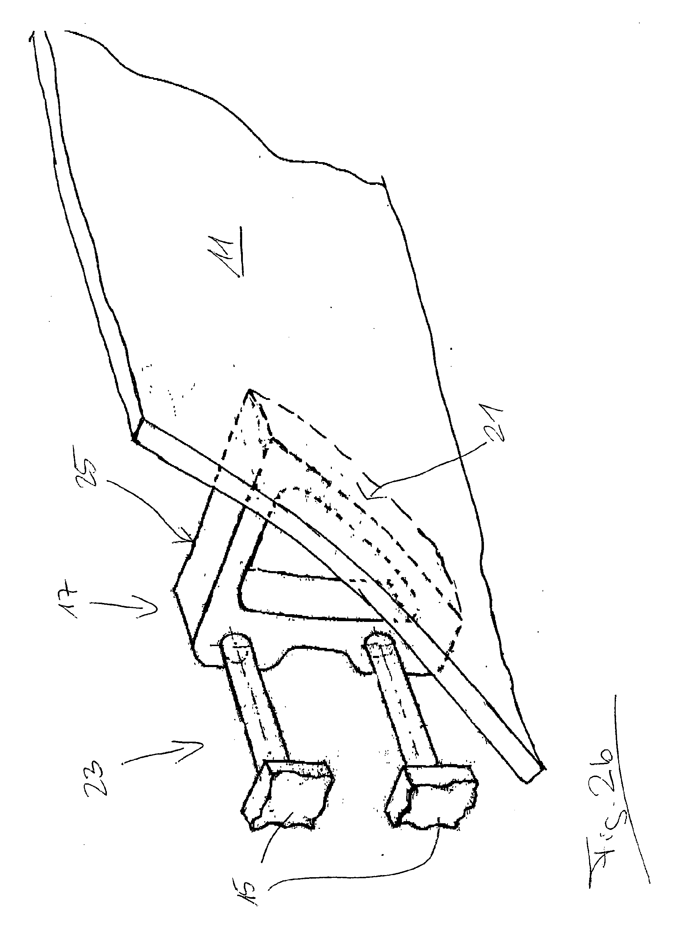

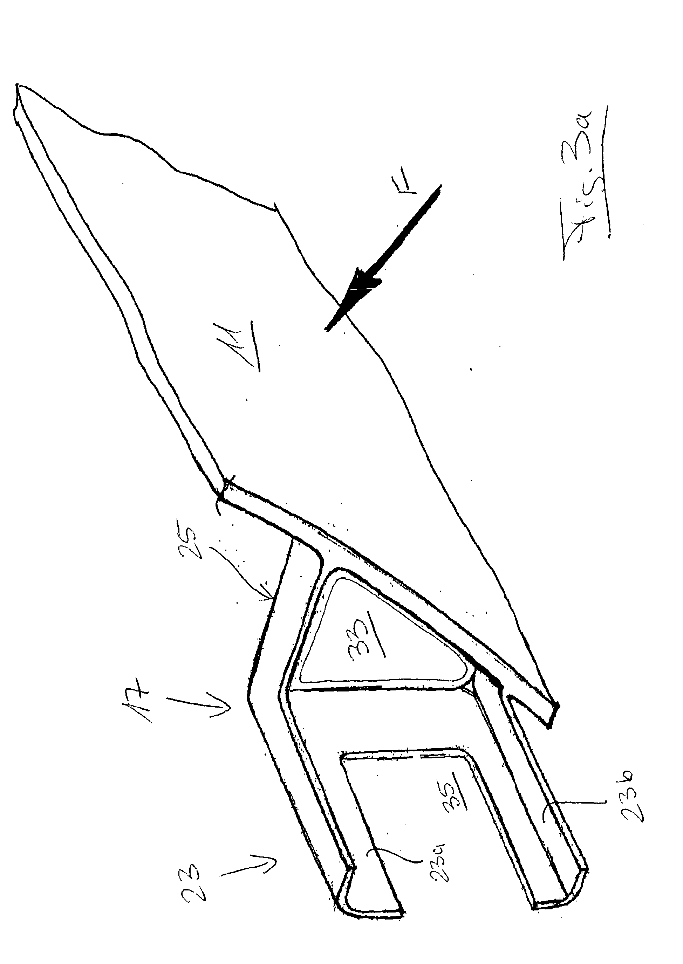

- Fig. 1 bis 6: verschiedene Ausführungsformen einer erfindungsgemäßen Knieschutzeinrichtung.

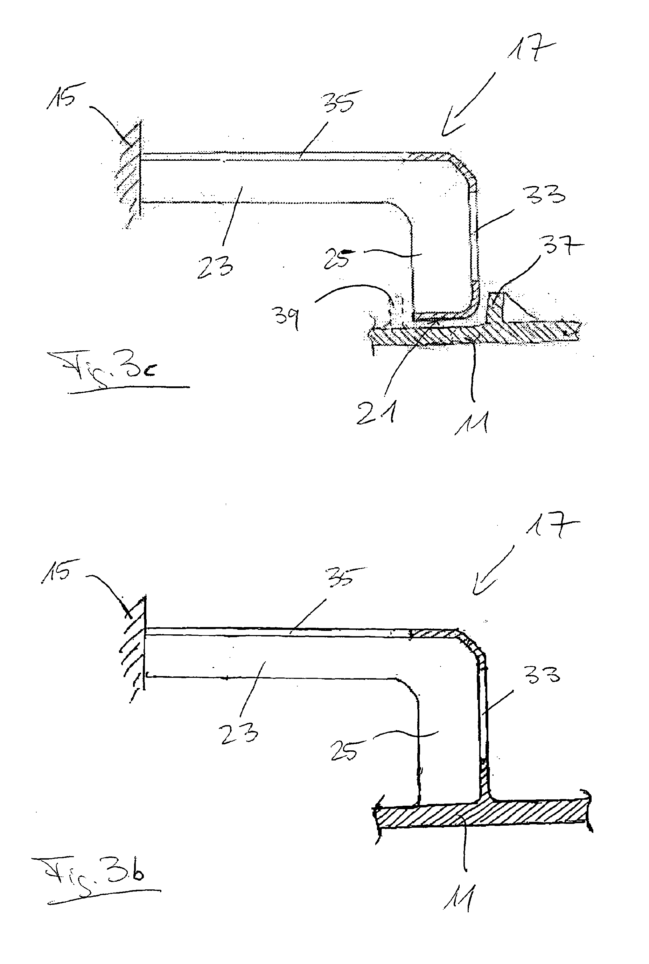

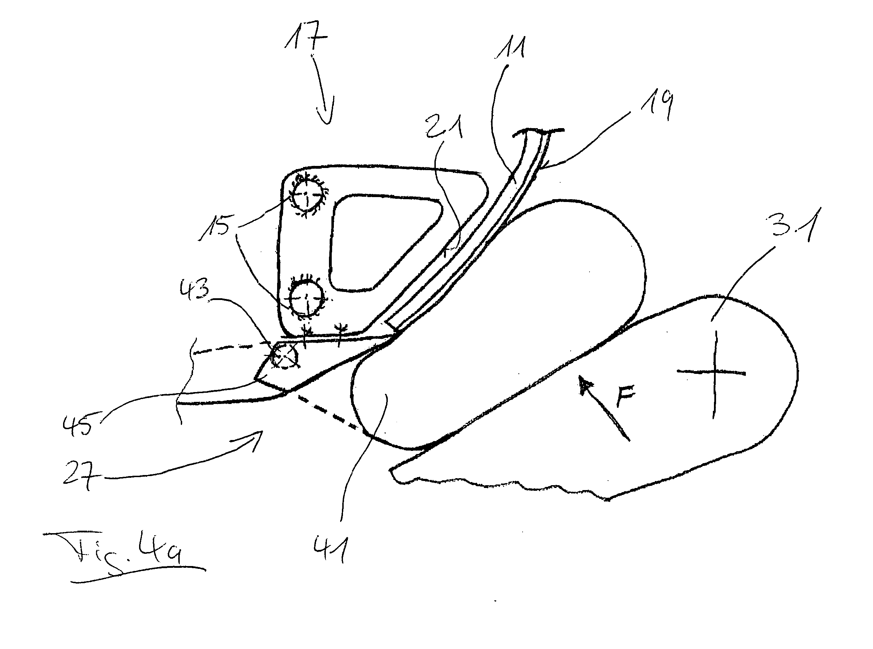

Alle nachstehend erläuterten Ausführungsbeispiele der Erfindung zeichnen sich durch eine laterale oder seitliche Befestigung einer Prall- oder Schutzplatte 11 aus, die sich im eingebauten Zustand quer zur Fahrzeuglängsachse erstreckt, wobei die Befestigung an seitlichen Fahrzeugstrukturen 13, 15 mittels einer Stützanordnung erfolgt, die zwei beabstandete Träger 17 umfasst. Die einzelnen Ausführungsformen unterscheiden sich im Wesentlichen durch die Ausgestaltung der Träger 17. In jeder Ausführung kann die Prallplatte 11 entweder - wie beispielsweise in Fig. 1 gezeigt - einstückig mit zumindest einem Teil der Träger 17 ausgebildet oder in Form eines separaten Bauteils vorgesehen sein, wie es z.B. in Fig. 2b und 3c dargestellt ist. Unabhängig davon kann bei jeder Ausführungsform die Prallplatte 11 in eine Instrumententafel des Fahrzeugs integriert sein bzw. ein Bestandteil der Instrumententafel bilden oder in Form eines separaten Bauteils vorgesehen sein, das z.B. - vom Fahrzeuginnenraum aus gesehen - hinter einer zum Fahrzeuginnenraum weisenden Außenseite der Instrumententafel angeordnet ist.

Als Befestigung für die Träger 17 kommt erfindungsgemäß jede ausreichend steife oder feste Struktur des Fahrzeugs in Frage. Auf der Fahrerseite beispielsweise kann der - in Fahrtrichtung gesehen - linke Träger 17 z.B. an der A-Säulenstruktur der Fahrzeugkarosserie befestigt werden. Zur Befestigung des rechten Trägers 17 kommt z.B. eine Tunnelstrebe oder eine Mittelkonsole des Fahrzeugs in Frage. Entsprechend seitenvertauscht sind die Verhältnisse auf der Beifahrerseite.

In dem Ausführungsbeispiel der Fig. 1 und 2a, die jeweils eine einstückige Ausgestaltung von Prallplatte 11 und Trägern 17 zeigen, umfasst jeder Träger 17 einen sich ausgehend von der Rückseite der Prallplatte 11 in Richtung der Fahrzeugslängsachse erstreckenden Stützabschnitt 25. Ausgehend vom freien Ende des Stützabschnitts 25 erstreckt sich unter einem rechten Winkel ein Befestigungsabschnitt 23 seitlich nach außen zur entsprechenden festen Fahrzeugstruktur 15 bzw. 13. Die Prallplatte 11 ist somit durch zwei sich seitlich nach außen erstreckende "Haltearme" zwischen in Querrichtung beabstandeten festen Fahrzeugstrukturen 13, 15 aufgehängt.

Ausgehend von dem Übergang zwischen Trägern 17 und Prallplatte 11 kann sich die Prallplatte 11 zwar weiter nach außen erstrecken. Nichtsdestotrotz ist auf Grund der erfindungsgemäßen lateralen Befestigung bzw. Aufhängung der - vom Fahrzeuginnenraum aus gesehen - hinter der Prallplatte 11 gelegene Raum zumindest über einen großen Bereich der Prallplatte 11 frei und steht somit für andere Zwecke zur Verfügung.

Die wirksamen Längen des Stützabschnitts 25 und des Befestigungsabschnitts 23 können entsprechend den jeweiligen Anforderungen variiert werden.

Die Träger 17 sind derart ausgebildet, dass sie sich unter dem Einfluss von auf die Vorderseite der Prallplatte 11 insbesondere über die Knie 31 eines Fahrzeuginsassen einwirkenden Kräften F verformen und dadurch Aufprallenergie absorbieren. Das konkrete Crashverhalten ist u.a. durch Material und Form der Träger 17 bestimmt und kann somit grundsätzlich beliebig vorgegeben werden. Bevorzugt wird erfindungsgemäß eine räumliche Verformung bzw. ein Kollabieren der Träger 17 dergestalt angestrebt, dass dem Fahrzeuginsassen nach einer möglichst kurzen Zeitspanne ein hoher Widerstand entgegengesetzt wird, der über einen möglichst langen Zeitraum und damit über einen langen Crashweg auf hohem Niveau aufrechterhalten bleibt. Die Träger 17 stellen somit "Knautschzonen" dar, die für eine definierte Bewegung der Prallplatte 11 nach vorne sorgen und dabei einen möglichst großen Anteil der über die Prallplatte 11 einwirkenden kinetischen Energie des Fahrzeuginsassen in Verformungsarbeit umwandeln.

Insbesondere lässt sich durch die erfindungsgemäße Lateralbefestigung sicherstellen, dass die Prallplatte 11, wenn sie bei einem Unfall beaufschlagt wird und sich dadurch nach vorne bewegt, die Träger 17 nicht seitlich nach außen gedrückt werden, was zur Folge hätte, dass nach relativ kurzer Zeit nur noch ein vergleichsweise geringer oder überhaupt kein Widerstand mehr vorhanden wäre. Vielmehr gewährleistet die erfindungsgemäße Trägeranordnung 17, dass eine Bewegung der Prallplatte 11 nach vorne zu jedem Zeitpunkt nur unter Überwindung eines Widerstands und damit unter Leistung von Verformungsarbeit an der Stützanordnung 17 möglich ist.

Fig. 2a zeigt eine mögliche Ausgestaltung der Anordnung von Fig. 1 in einer perspektivischen Darstellung. Der Befestigungsabschnitt 23 umfasst in diesem Beispiel zwei in z-Richtung, d.h. vertikal, beabstandete Befestigungsarme 23a, 23b, die an der festen Fahrzeugstruktur 15 befestigt sind und mit ihrem gegenüberliegenden Ende mit dem Stützabschnitt 25 verbunden oder einstückig mit diesem ausgebildet sind. Das Verformungsverhalten des Befestigungsabschnitts 23 kann beispielsweise durch Variieren der Durchmesser der Befestigungsarme 23a, 23b vorgegeben werden. Auch können die Befestigungsarme 23a, 23b beispielsweise unterschiedliche Durchmesser aufweisen. Die Abmessungen der Träger 17 in allen drei Raumrichtungen x, y und z können beliebig variiert werden.

Der Stützabschnitt 25 des Trägers 17 ist als offener Rahmen ausgebildet. Rahmenstärke und Größe der Rahmenöffnung 33 können variiert werden. Auch kann alternativ der Stützabschnitt 25 mit einer Mehrzahl von Einzelöffnungen versehen sein. Dies ergibt eine Vielzahl von Möglichkeiten, das Crashverhalten der Träger 17 zu "tunen", d.h. gezielt vorzugeben und insbesondere das Verhalten der erfindungsgemäßen Knieschutzeinrichtung insgesamt an die jeweiligen Anforderungen optimal anzupassen.

Fig. 2b zeigt das Ausführungsbeispiel der Fig. 2a mit dem Unterschied, dass die Prallplatte 11 einerseits und die Träger 17 andererseits als separate Bauteile vorgesehen sind. Der Stützabschnitt 25 ist an seiner der Prallplatte 11 zugewandten Seite mit einer entsprechend dem Verlauf der Rückseite der Prallplatte 11 geformten Stützfläche 21 versehen, über welche die Prallplatte 11 bei einem Unfall auf den Träger 17 einwirkt.

Fig. 3a zeigt ein besonders kostengünstiges Ausführungsbeispiel. Die Träger 17 sind jeweils in Form eines durch Biegen versteiften Blechteils vorgesehen, das in dem gezeigten Beispiel einen mit einer Öffnung 33 versehenen, rahmenartigen Stützabschnitt 25 und einen dazu rechtwinklig verlaufenden Befestigungsabschnitt 23 umfasst. Letzterer ist mit einem Ausschnitt 35 versehen ist, so dass zwei vertikal beabstandete Befestigungsarme 23a, 23b vorhanden sind, über welche die Befestigung an der festen Fahrzeugstruktur (hier nicht dargestellt) erfolgt.

Durch Variieren der Form und Größe des Ausschnitts 35 sowie der Öffnung 33 kann das Crashverhalten des Trägers 17 wiederum grundsätzlich beliebig vorgegeben werden. Es ist auch eine geschlossene Ausgestaltung des Befestigungsabschnitts 25 möglich, d.h. auf die Öffnung 33 kann vollständig verzichtet werden. Die Prallplatte 11 ist in diesem Beispiel einstückig mit den Trägern 17 ausgebildet.

Die Träger 17 bzw. die Gesamtanordnung aus Trägern 17 und Prallplatte 11 kann auch aus Kunststoff hergestellt sein. Allgemein kommen unterschiedliche Materialien in Frage. So kann z.B. Stahl, Aluminium oder Magnesium verwendet werden, auch andere Metalle sind möglich. Des Weiteren können für die Träger 17 bzw. die Prallplatte 11 unterschiedliche Herstellungstechnologien zum Einsatz kommen.

Die Fig. 3b und 3c zeigen eine Ausführung entsprechend Fig. 3a in einem Horizontalschnitt. Der Vergleich dieser beiden Darstellungen zeigt, dass die gleiche Grundanordnung sowohl in einer einstückigen Variante (Fig. 3b) als auch in einer Variante zum Einsatz kommen kann, in der die Prallplatte 11 und die Träger 17 separate Bauteile sind (Fig. 3c).

In dem Beispiel der Fig. 3c ist die Prallplatte 11 auf ihrer Rückseite mit einer Wand 37 versehen, die - bezogen auf die Lage des Stützabschnitts 25 des Trägers 17 - innen positioniert ist. Der sich im Crashfall verformende Träger 17 bzw. dessen Stützabschnitt 25 wird dabei durch die Wand 37 geführt. Alternativ oder zusätzlich kann eine auf der Außenseite liegende Wand 39 vorgesehen sein, die in Fig. 3c durch eine gestrichelte Linie angedeutet ist. Die Gesamtanordnung aus Prallplatte 11 und Trägern 17 erhält durch diese Wände 37, 39 eine zusätzliche Seitenstabilität. Derartige Maßnahmen können bei allen Varianten vorgesehen sein, bei denen die Stützanordnung 17 und die Prallplatte 11 nicht einstückig miteinander ausgebildet oder auf sonstige Weise fest miteinander verbunden sind.

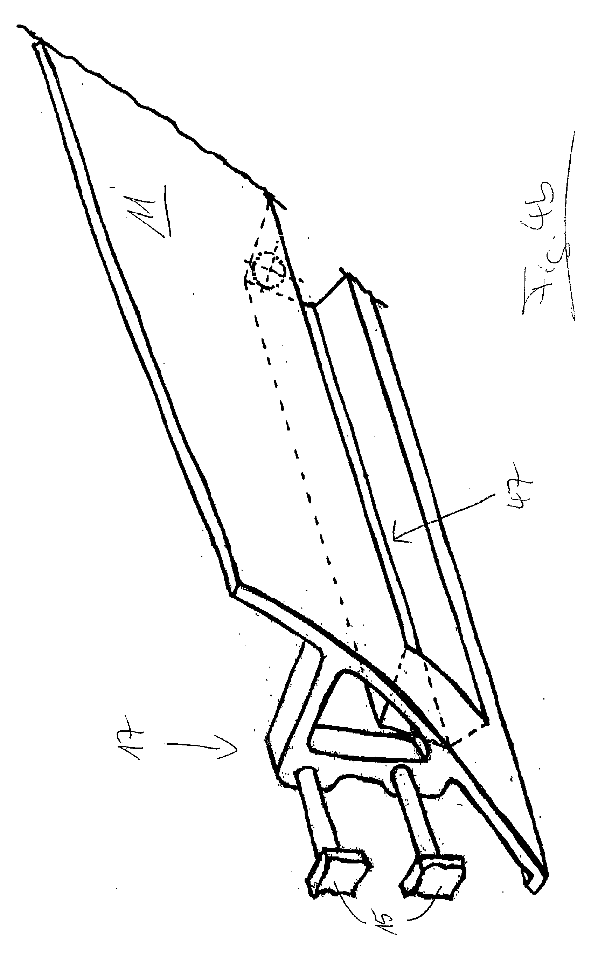

Die Fig. 4a und 4b zeigen die Möglichkeit, in die erfindungsgemäße Knieschutzeinrichtung ein Airbagmodul 27 zu integrieren. Das Modulgehäuse 45 ist in diesem Beispiel unterhalb der Stützanordnung angeordnet und an deren Trägern 17 befestigt. Von dem Airbagmodul 27 sind schematisch ein Gasgenerator 43 sowie ein Luftsack 41 im aufgeblasenen Zustand dargestellt. Der Luftsack 41 befindet sich zwischen der zum Fahrzeuginnenraum weisenden Außenseite einer Instrumententafel 19 und den Knien 31 bzw. Unterschenkeln eines Fahrzeuginsassen.

In dem hier dargestellten Beispiel ist die Prallplatte 11 ein separates Bauteil, kann alternativ aber auch einstückig mit den Trägern 17 verbunden sein. Die Prallplatte 11 ist hier in die Instrumententafel 19 des Fahrzeugs derart integriert, dass sie hinter einer zum Fahrzeuginnenraum weisenden Außenwand der Instrumententafel 19 angeordnet ist. Diese Wand kann beispielsweise in Form eines dünnen flexiblen Überzugs vorgesehen sein.

Die Prallplatte 11 bildet aufgrund ihrer durch die verformbaren Träger 17 wohldefinierten, gesteuerten Bewegbarkeit bei einem Unfall eine bewegbare Basisplatte für den aufgeblasenen Luftsack 41.

Die in Fig. 4a dargestellte Anordnung aus Instrumententafel 19, Prallplatte 11 und Trägern 17 ist auch ohne Knieairbagmodul 27 einsetzbar.

Fig. 4b zeigt eine einstückige Variante entsprechend dem Ausführungsbeispiel der Fig. 2a. Die Prallplatte 11 ist zusätzlich mit einer in Querrichtung lang gestreckten Aufnahme 47 versehen, in der ein Airbagmodul untergebracht werden oder in die ein Airbagmodul direkt integriert sein kann, wobei im letzteren Fall die die Aufnahme begrenzende Wand der Prallplatte 11 das Gehäuse des Airbagmoduls bilden kann.

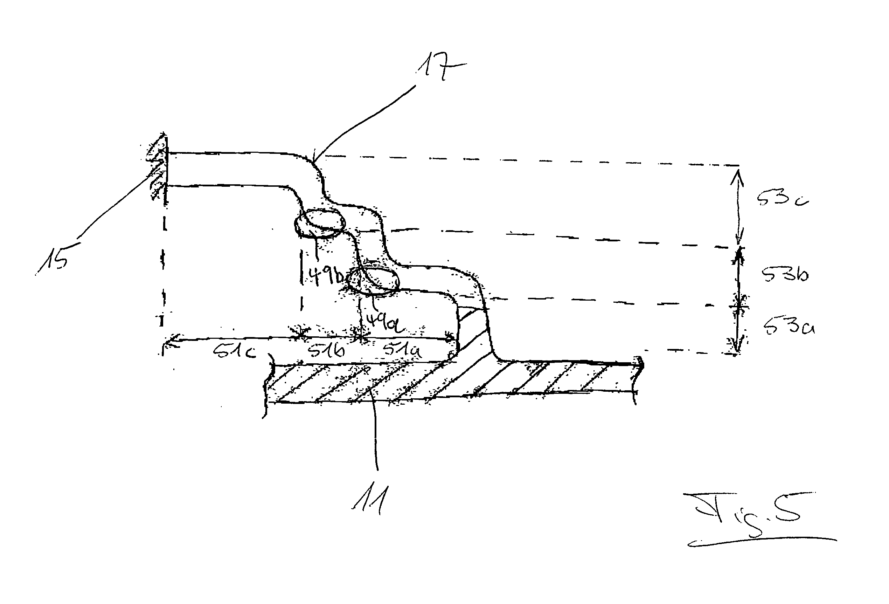

Fig. 5 zeigt ein weiteres Ausführungsbeispiel der Erfindung, bei dem sich ein Teil des Trägers 17 schräg zur Fahrzeuglängsachse erstreckt und dabei einen stufen- oder wellenförmigen Verlauf aufweist. Der gestufte Bereich umfasst aufeinanderfolgende Längsabschnitte 53 und Querabschnitte 51. Die hierdurch gebildeten "Verformungsstufen" sorgen im Crashfall für eine gesteuerte schrittweise Erhöhung des der Prallplatte 11 entgegengesetzten Widerstands in Abhängigkeit von dem bereits erreichten Verformungsgrad. Durch die konkrete Ausgestaltung der einzelnen Verformungsstufen kann folglich das Crashverhalten des Trägers 17 insgesamt gezielt vorgegeben werden.

Bei einem Unfall gelangt die Prallplatte 11 nach Verformung der von den Abschnitten 53a und 51a gebildeten ersten Stufe in Kontakt mit dem Bereich 49a, woraufhin die von den Abschnitten 53b und 51b gebildete Stufe verformt wird und die Prallplatte 11 in Kontakt mit dem Bereich 49b gelangt. Die bei Erreichen jeder Stufe vorhandene maximale Länge des "Deformationsarmes" des Trägers 17 kann durch die Längen der Querabschnitte 51 vorgegeben werden.

Durch Variieren der Form und der Größe der einzelnen Abschnitte 51, 53 können die Träger 17 folglich insgesamt optimal an die jeweiligen Anforderungen angepasst werden.

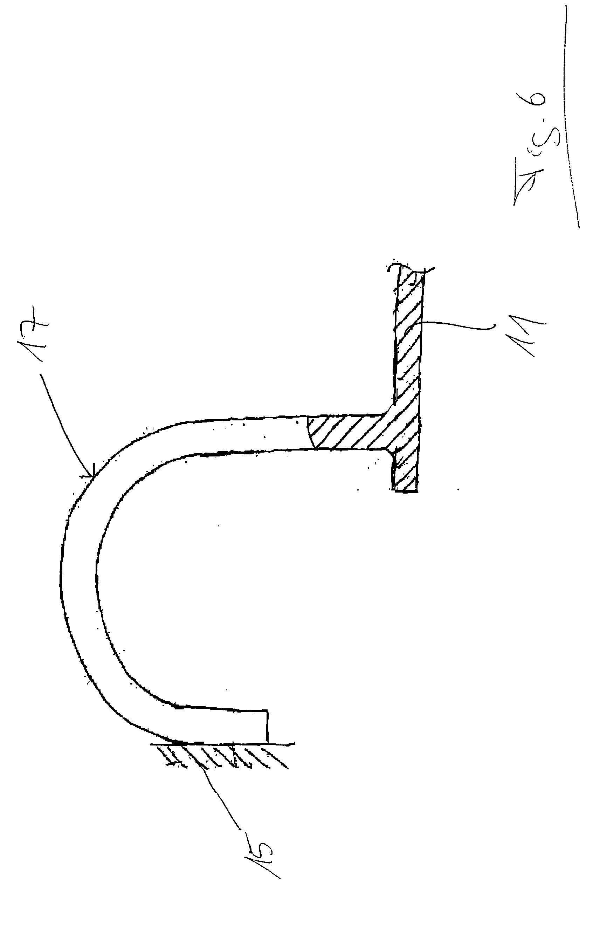

Bei dem in Fig. 6 dargestellten Ausführungsbeispiel sind die Träger 17 gekrümmt ausgeführt, wobei sie - in einem horizontalen Querschnitt gesehen - jeweils einen U-förmigen Verlauf aufweisen. Die offene Seite des "U" weist in Fahrtrichtung gesehen nach hinten. Der kürzere U-Schenkel dient zur Befestigung des Trägers 17 an der festen Fahrzeugstruktur 15, wohingegen an das freie Ende des längeren U-Schenkels sich die Prallplatte 11 anschließt. Eine gedachte Verbindungslinie zwischen den freien Enden der U-Schenkel verläuft somit schräg zur Fahrzeuglängsachse.

In den beiden Ausführungsformen der Fig. 5 und 6 kann die Prallplatte 11 auch separat von den Trägern 17 vorgesehen sein. In diesem Fall kann die Prallplatte 11 entsprechend dem in Fig. 3c gezeigten Ausführungsbeispiel mit Führungswänden für das insbesondere eine Stützfläche aufweisende Stützende des Trägers 17 versehen sein.

Die Träger können auch mehrteilig ausgeführt sein. Dabei kann vorgesehen sein, dass jeder Träger modular aufgebaut und für jedes Modul der untereinander kombinierbaren Module ein Satz von unterschiedlichen Exemplaren vorgesehen ist, die sich z.B. durch ihr Material und/oder die Herstellungstechnologie voneinander unterscheiden. Hierdurch kann auf vergleichsweise kostengünstige Weise unterschiedlichen, z.B. länderabhängigen, Anforderungen entsprochen werden.

### Bezugszeichenliste

- 11: Prallplatte
- 13: Fahrzeugstruktur
- 15: Fahrzeugstruktur
- 17: Stützanordnung, Träger
- 19: Instrumententafel
- 21: Stützfläche
- 23: Befestigungsabschnitt
- 23a, b: Befestigungsarm
- 25: Stützabschnitt
- 27: Airbagmodul
- 31: Knie
- 33: Öffnung
- 35: Ausschnitt
- 37: Wand
- 39: Wand
- 41: Luftsack
- 43: Gasgenerator
- 45: Modulgehäuse
- 47: Aufnahme
- 49a, b: Kontaktbereich
- 51 a, b, c: Querabschnitt
- 53a, b, c: Längsabschnitt

## Patentansprüche

1. Knieschutzeinrichtung für Kraftfahrzeuge mit
- einer Prallplatte (11), die sich im Einbauzustand quer zur Fahrzeuglängsachse erstreckt, und
- einer an festen Fahrzeugstrukturen (13, 15) befestigbaren Stützanordnung (17) für die Prallplatte (11),
wobei die Stützanordnung (17) an seitlich von der Prallplatte (11) gelegenen Strukturen (13, 15) des Fahrzeugs befestigbar und zur Absorption von Aufprallenergie verformbar ist.

2. Knieschutzeinrichtung nach Anspruch 1,
**dadurch gekennzeichnet,**
**dass** sich die Stützanordnung (17) ausgehend von der Rückseite der Prallplatte (11) seitlich aus dem hinter der Prallplatte (11) gelegenen Raum heraus zu den seitlichen Fahrzeugstrukturen (13, 15) erstreckt.

3. Knieschutzeinrichtung nach Anspruch 1 oder 2,
**dadurch gekennzeichnet,**
**dass** die Prallplatte (11) einstückig mit zumindest einem Teil der Stützanordnung (17) ausgebildet ist.

4. Knieschutzeinrichtung nach einem der vorhergehenden Ansprüche,
**dadurch gekennzeichnet,**
**dass** die Prallplatte (11) als integrierter Teil einer Instrumententafel (19) des Fahrzeugs ausgebildet ist, wobei bevorzugt die Stützanordnung (17) eine Stützfläche (21) für die Prallplatte (11) aufweist.

5. Knieschutzeinrichtung nach einem der vorhergehenden Ansprüche,
**dadurch gekennzeichnet,**
**dass** die Stützanordnung zwei in Querrichtung beabstandete Träger (17) umfasst, die jeweils mit ihrem einen Ende seitlich am Fahrzeug befestigbar und zur Abstützung der Prallplatte (11) mit ihrem anderen Ende ausgebildet sind.

6. Knieschutzeinrichtung nach Anspruch 5,
**dadurch gekennzeichnet,**
**dass** jeder Träger (17) als Winkelelement ausgebildet ist.

7. Knieschutzeinrichtung nach Anspruch 5 oder 6,
**dadurch gekennzeichnet,**
**dass** jeder Träger (17) zwischen seinem Befestigungsende und dem Stützende eine Abstandskomponente sowohl quer als auch parallel zur Fahrzeuglängsachse aufweist.

8. Knieschutzeinrichtung nach einem der Ansprüche 5 bis 7,
**dadurch gekennzeichnet,**
**dass** jeder Träger (17) einen quer verlaufenden, seitlich am Fahrzeug befestigbaren Befestigungsabschnitt (23) und einen in Längsrichtung verlaufenden Stützabschnitt (25) umfasst.

9. Knieschutzeinrichtung nach einem der Ansprüche 5 bis 8,
**dadurch gekennzeichnet,**
**dass** jeder Träger (17) zumindest bereichsweise als offener Rahmen ausgebildet ist.

10. Knieschutzeinrichtung nach einem der Ansprüche 5 bis 9,
**dadurch gekennzeichnet,**
**dass** jeder Träger (17) sich zumindest bereichsweise schräg zur Fahrzeuglängsachse erstreckt.

11. Knieschutzeinrichtung nach einem der Ansprüche 5 bis 10,
**dadurch gekennzeichnet,**
**dass** jeder Träger (17) zumindest bereichsweise einen gestuften oder wellenartigen Verlauf aufweist.

12. Knieschutzeinrichtung nach einem der Ansprüche 5 bis 11,
**dadurch gekennzeichnet,**
**dass** jeder Träger (17) in einem horizontalen Querschnitt etwa U-förmig gebogen ist.

13. Knieschutzeinrichtung nach einem der Ansprüche 5 bis 12,
**dadurch gekennzeichnet,**
**dass** jeder Träger (17) einstückig ausgebildet ist.

14. Knieschutzeinrichtung nach einem der Ansprüche 5 bis 12,
**dadurch gekennzeichnet,**
**dass** jeder Träger (17) mehrteilig ausgeführt, wobei bevorzugt jeder Träger (17) modular aufgebaut und für jedes Modul der untereinander kombinierbaren Module ein Satz von unterschiedlichen Exemplaren vorgesehen ist.

15. Knieschutzeinrichtung nach einem der vorhergehenden Ansprüche,
**dadurch gekennzeichnet,**
**dass** unterhalb der Stützanordnung (17) ein Airbagmodul (27) vorgesehen ist, das an der Stützanordnung (17) angebracht ist.

16. Knieschutzeinrichtung nach einem der vorhergehenden Ansprüche,
**dadurch gekennzeichnet,**
**dass** die Platte (11) und/ oder die Stützanordnung (17) aus Kunststoff, insbesondere aus faserverstärktem Kunststoff, hergestellt ist und/oder Stahl, Aluminium oder Magnesium umfasst.

17. Kraftfahrzeuginnenausstattung, insbesondere Cockpit-System oder Rückhaltesystem, mit wenigstens einer Knieschutzeinrichtung, die eine sich im Einbauzustand quer zur Fahrzeuglängsachse erstreckende Prallplatte (11) und eine Stützanordnung (17) für die Prallplatte (11) umfasst, wobei die Stützanordnung (17) an seitlich von der Prallplatte (11) gelegenen festen Strukturen (13, 15) des Fahrzeugs befestigbar und zur Absorption von Aufprallenergie verformbar ist.

18. Kraftfahrzeuginnenausstattung nach Anspruch 17,
**dadurch gekennzeichnet,**
**dass** eine Knieschutzeinrichtung mit den Merkmalen eines der Ansprüche 1 bis 16 vorgesehen ist.
